# EUROPEAN PATENT APPLICATION

(11) **EP 3 168 080 A1**
(43) Date of publication of application: **17.05.2017**
(21) Application number: 16382464.2
(22) Date of filing: 13.10.2016
(51) Int. Cl.: B60P 3/20

(54) **DOOR FOR A COLD-STORAGE/REFRIGERATED VEHICLE**

(30) Priority: 10.11.2015 ES 201531234
(71) Applicant: Indetruck, S.L., 03800 Alcoy (ES)
(72) Inventor: SOLER EGEA, JUAN ANTONIO, 03800 ESPAÑA (ES)
(74) Representative: Temiño Ceniceros, Ignacio

(57) **Abstract**

The present invention relates to a door (1) for a cold-storage/refrigerated vehicle comprising:
1 a) an inner face (11) configured for closing an opening (2) of an enclosure (3) of the vehicle;
1b) an outer face (12) opposite the inner face (11);
characterized in that it comprises:
1c) a first thickness (13) between the outer face (12) and the inner face (11);
1d) a second thickness (14) between the outer face (12) and the inner face (11);
wherein:
1 e) the first thickness (13) is greater than the second thickness (14);
1f) the first thickness (13) and the second thickness (14) are distributed to form a channel (15) on the inner face (11).

## Description

### TECHNICAL FIELD

The invention relates to a door for a cold-storage vehicle. The application of the invention is within the industry dedicated to the manufacture of cold-storage vehicles.

### PRIOR ART

Cold-storage or refrigerated vehicles transport perishable goods that must be properly refrigerated. In the refrigerated vehicle sector, the inner face of the rear doors of a cold-storage vehicle is smooth.

In order for there to be good air circulation and for the entire load to be kept equally at the desired temperature, the air must move above the load, behind it, then go down and pass through on the underside without any difficulties for its passage.

The problem arises if the load goes so far back that the pallets touch the inner face of the rear doors, making it difficult for air to circulate. In this case, since air does not circulate well, or since a considerable part of the load does not reach the desired temperature, or in order for said part to reach said temperature another one has to be much colder, with the problems this entails of damaging the load due to an excessively low or excessively high temperature.

To solve this problem road haulers usually place metal parts by hand separating the load from the inner face of the rear doors.

These drawbacks are compensated for with the door of the invention.

### BRIEF DISCLOSURE OF THE INVENTION

To solve the problem described above, the door of the invention comprises an inner face having a corrugated shape such that it has different thicknesses. The load can abut with the areas of greater thickness and strips are left that go from the top to the bottom of the door that are of less thickness where the air can circulate completely without any problems, thereby preventing part of the load from spoiling.

A basic embodiment of the invention is defined in claim 1. The dependent claims define additional features of the invention.

### DESCRIPTION OF THE DRAWINGS

Figure 1 is a diagram of a rear view of a cold-storage/refrigerated vehicle with conventional doors.
Figure 2 is a diagram of a rear view of a cold-storage/refrigerated vehicle with the doors of the invention.
Figure 3 is a cross-section view of a door of the invention.
Figure 4 is a perspective view of a door of the invention.
Figure 5 is a diagram of a longitudinal section of a cold-storage/refrigerated vehicle with conventional doors.
Figure 6 is a diagram of a longitudinal section of a cold-storage/refrigerated vehicle with the doors of the invention.

The reference numbers used for the elements of the invention are indicated below:
Door (1)
Inner face (11)
Outer face (12)
Opening (2)
Enclosure (3)
First thickness (13)
Second thickness (14)
Channel (15)
First edge (16)
Second edge (17)

### DETAILED DISCLOSURE OF THE INVENTION

One aspect of the invention relates to a door (1) for a cold-storage/refrigerated vehicle comprising:
1a) an inner face (11) configured for closing an opening (2) of an enclosure (3) of the vehicle;
1b) an outer face (12) opposite the inner face (11);
1c) a first thickness (13) between the outer face (12) and the inner face (11);
1d) a second thickness (14) between the outer face (12) and the inner face (11);
where:
1 e) the first thickness (13) is greater than the second thickness (14);
1f) the first thickness (13) and the second thickness (14) are distributed to form a channel (15) on the inner face (11). The channel (15) on the inner face (11) of the door (1) allows air to circulate through the enclosure (3) in a way that is not possible with conventional doors. This channel (15) assures that there is a channel that allows the passage of air between different areas of the enclosure (3), even in the event of the load abutting with the door (1).

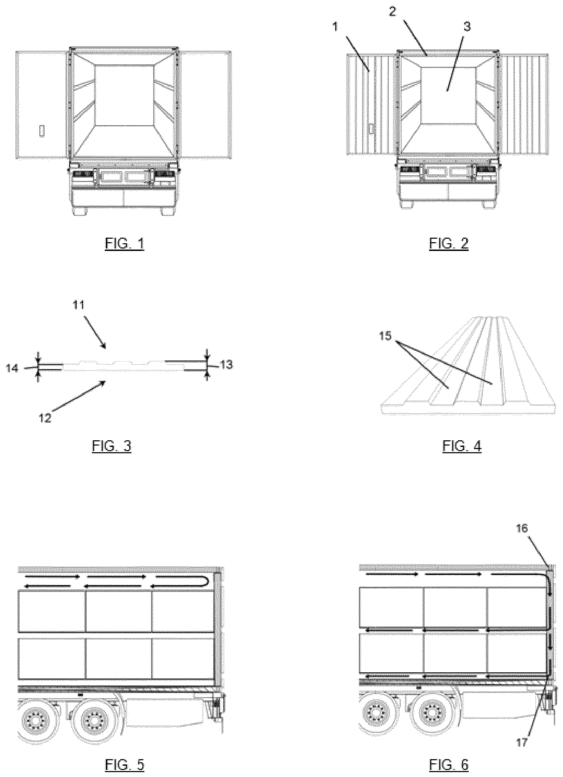

Figure 5 illustrates the case of a conventional door, where the passage of air is blocked by the load abutting with the door as indicated by the arrows. Figure 6 shows, in contrast, using the arrows, how the door (1) of the invention does in fact allow air to circulate throughout the entire enclosure (3).

According to other features of the invention:
2. The door (1) can comprise:
   2a) a first edge (16);
   2b) a second edge (17) opposite the first edge (16);
   where:
   2c) the channel (15) runs between the first edge (16) and the second edge (17). This length of the channel reaching the entire inner face (11) allows for better air distribution in the enclosure (3).
   3a) The first edge (16) can be an upper edge;
   3b) the second edge (17) can be a lower edge. The orientation of the channel (15) between the first edge (16), which is the upper edge, and the second edge (17), which is the lower edge, improves air circulation in the enclosure (3) due to the difference in temperature that is reached between the lower area and the upper area of the enclosure (3). It also favors temperature uniformity inside the enclosure (3), which contributes to the goods inside the enclosure (3) being at a closer temperature with respect to one another. This air circulation inside the enclosure (3) is indicated with the arrows in Figure 6.
4. The channel (15) can be vertical. This vertical direction of the channel favors air circulation in the enclosure (3).
5. The channel (15) can have a trapezoidal cross-section. This shape of the channel (15), with the inclined walls (151) illustrated in Figures 3 and 4, provides more strength to the door (1) and maximizes the passage of air through the channel (15).
6. The door (1) can be a rear door.

## Claims

1. A door (1) for a cold-storage/refrigerated vehicle comprising:
1 a)an inner face (11) configured for closing an opening (2) of an enclosure (3) of the vehicle;
1 b)an outer face (12) opposite the inner face (11);
**characterized in that** it comprises:
1c) a first thickness (13) between the outer face (12) and the inner face (11);
1d) a second thickness (14) between the outer face (12) and the inner face (11);
wherein:
1e) the first thickness (13) is greater than the second thickness (14);
1f) the first thickness (13) and the second thickness (14) are distributed to form a channel (15) on the inner face (11).

2. The door (1) for a cold-storage/refrigerated vehicle according to claim 1, comprising:
2a) a first edge (16);
2b) a second edge (17) opposite the first edge (15);
**characterized in that**:
2c) the channel (15) runs between the first edge (16) and the second edge (17).

3. The door (1) for a cold-storage/refrigerated vehicle according to claim 2, **characterized in that**:
3a) the first edge (16) is an upper edge;
3b) the second edge (17) is a lower edge.

4. The door (1) for a cold-storage/refrigerated vehicle according to claim 3, **characterized in that** the channel (15) is vertical.

5. The door (1) for a cold-storage/refrigerated vehicle according to claim 1, **characterized in that** the channel (15) has trapezoidal cross-section.

6. The door (1) for a cold-storage/refrigerated vehicle according to claim 1, **characterized in that** it is a rear door.
